# EUROPEAN PATENT SPECIFICATION

(11) **EP 1 465 483 B1**
(45) Date of publication and mention of the grant of the patent: **06.12.2006**
(21) Application number: 02806532.4
(22) Date of filing: 11.11.2002
(51) Int. Cl.: A01M 29/00

(54) **REPELLENT APPARATUS AND METHOD**
ABSCHRECKVORRICHTUNG UND VERFAHREN
APPAREIL ET PROCEDE SERVANT A REPOUSSER LES ANIMAUX

(30) Priority: 17.01.2002 ZA 200200416
(43) Date of publication of application: 13.10.2004
(73) Proprietor: MARCUS, Stanley, Morningside 2057 Sandton (ZA)
(72) Inventor: MARCUS, Stanley, Morningside 2057 Sandton (ZA)
(74) Representative: Kritzenberger, Jürgen Hermann
(86) International application number: PCT/ZA2002/000172
(87) International publication number: WO 2003/059059

(56) References cited:
- FR-A- 1 413 260
- GB-A- 2 156 645
- US-B1- 6 385 915

## Description

### BACKGROUND OF THE INVENTION

This invention relates to a method of and apparatus for repelling animals from a given area.

The invention is described hereinafter with particular reference to repelling animals such as birds from an area such as an airport in an aircraft hanger or other building, on external surfaces eg. ledges or balconies in a building, from agricultural areas eg. vineyards, orchards etc, and from sports fields such as golf courses and the like. The scope of the invention is not confined to these particular applications which are given by way of examples only. Generally the principles of the invention are applicable to repelling animals (birds or ground animals) from an area which is in the open or inside or on a building.

The presence of birds at an airport constitutes a significant safety hazard to aircraft which are landing at, or taking off from, the airport. A typical airport extends over a substantial area and can have a large number of runways laid out in different directions over the area. Vegetation, typically grass, is established or naturally grows on the surfaces between runways. This vegetation can play host to a variety of animals and, in particular, to birds which, with the passage of time, can establish themselves and form large colonies.

If an aircraft which is landing or taking off at a runway collides with a bird or a flock of birds, or draws one or more birds into its air intake to one of its engines, the consequences can be disastrous.

Much effort has been expended in attempts to repel birds from an airport and, more particularly, from ground which is adjacent runways. Diverse techniques exist including noise generators, scarecrows, ultrasonic transmitters, electrical devices which apply mild electric shocks, electrically operated scarecrows and the like. It has been found that although these devices may, at least initially, be effective they are often not effective against all bird species but, more importantly, with the passage of time habituation lessens the effectiveness of the devices. Habituation is the waning of responsiveness to a deterrent which occurs when birds learn that the deterrent, as a matter of fact, does not present danger.

Although it may be possible to control bird populations by killing the birds this may be undesirable from an environmental point of view. This approach can also lead to a public outcry.

A related problem presents itself in hangers and other lofty buildings in or on which birds can seek sanctuary effectively protected by the substantial distance which exists between humans, on the ground, and the perches of the birds. Droppings from these birds can cause serious damage to equipment and machinery, mar a building and can constitute a serious health hazard.

### SUMMARY OF INVENTION

The invention provides in the first instance a method of repelling animals from an area according to claim 1.

The device may be caused to move substantially randomly, or in a predetermined manner.

The time at which the device is caused to be moved may be varied, according to requirement.

The pressurised fluid may comprise any suitable pressurised fluid and for example may comprise compressed air.

One or more substances may be entrained in the pressurised fluid. The substance could for example be selected from the following: water, sand, mud and the like. The invention is not limited in this regard.

The device may be flexible and may be caused to move with a whip action due to the pressurised fluid which flows through the device.

The pressurised fluid may be allowed to escape from the device through one or more nozzles which may be shaped to cause a reaction force which helps to cause movement of the device.

The device may be caused to rotate around an axis.

A plurality of the devices may be actuated so that they are simultaneously caused to move, or so that they are caused to move in succession in a predetermined sequence, or randomly.

The invention also provides apparatus for repelling animals from an area according to claim 7.

The pressurised fluid is preferably compressed air.

The device may include a tube. The tube may be elongate and flexible. The tube may include one or more outlet nozzles through which pressurised fluid escapes from the tube. These nozzles may be oriented to assist in causing movement of the tube.

Alternatively, in the case in which the tube is flexible, the tube may be caused to move, substantially in a random manner, by the flow of compressed air through the tube.

Means may be provided for entraining a substance into the flow of pressurised fluid through the tube. The substance may be sand, water, mud or the like.

In one form of the invention the device is caused to rotate around a fixed axis.

The device may be elevated, at least to a limited extent, upon application of the pressurised fluid to the inlet and it may be allowed, to settle, under gravity or other action, to an inoperative position when the pressurised fluid is not applied to the inlet.

The invention also extends to a system for repelling animals from an area according to claim 12.

### BRIEF DESCRIPTION OF THE DRAWINGS

The invention is further described by way of examples with reference to the accompanying drawings in which:
Figure 1 is a schematic plan view of an airfield in which the method of the invention is used for repelling birds from areas adjacent runways at the airfield;
Figures 2 and 4 respectively illustrate different devices which are usable in the method of the invention; and
Figure 5 illustrates a system for repelling animals in a diagrammatic form.

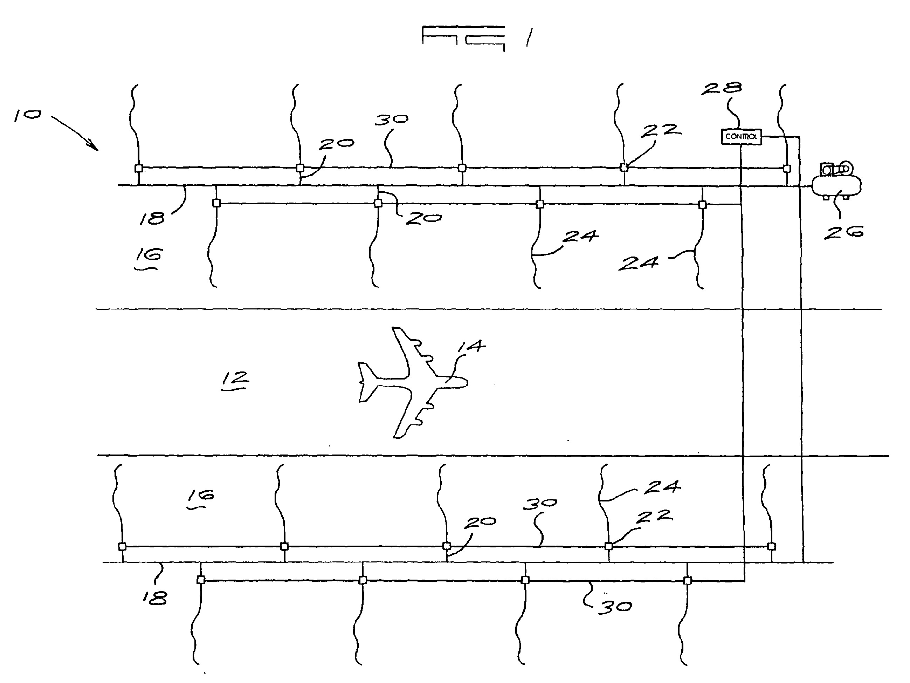

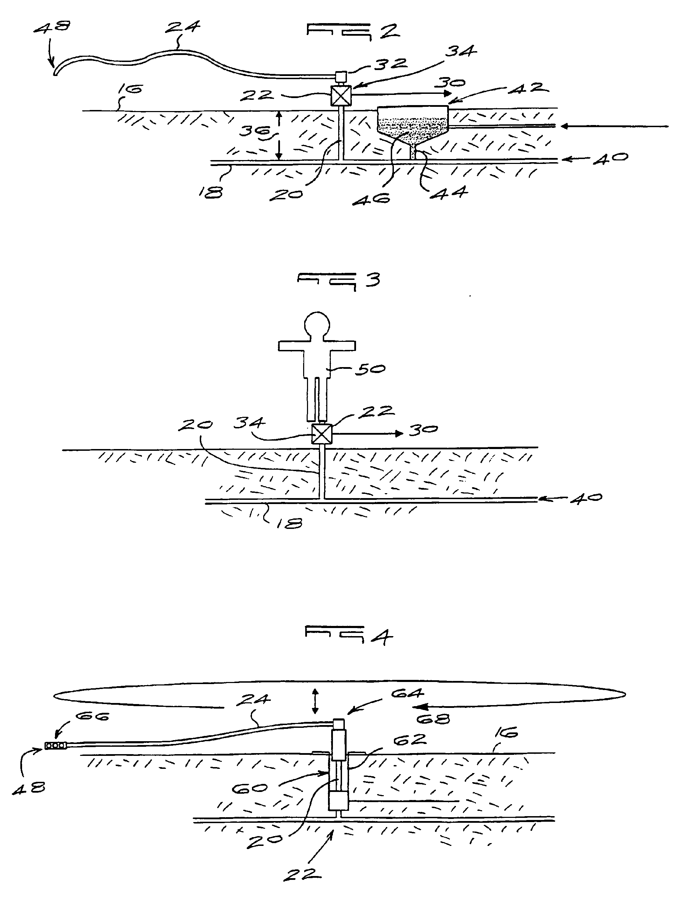

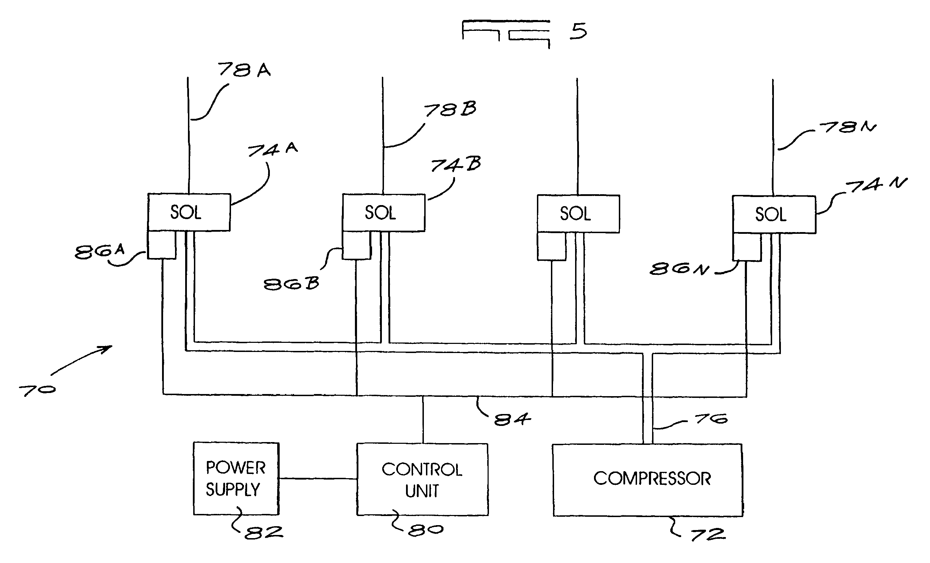

Figure 3 illustrates a device which does not constitute an embodiment of the invention.

### DESCRIPTION OF PREFERRED EMBODIMENTS

Figure 1 of the accompanying drawings illustrates in plan an airfield 10 which includes a plurality of runways 12. Only one runway is shown in the drawing and it is to be understood that other runways at the airfield are treated in substantially the same way as what is described hereinafter.

The runway 12 is normally formed from concrete or a similar hardwearing surface. An aircraft 14 may traverse the runway in either direction. These aspects are known in the art and are not further described herein.

Ground 16 adjacent the runway 12 comprises bare earth over which vegetation, not shown, is established. Typically this vegetation includes one or more varieties of grass, as has been described hereinbefore. The vegetation may play host to one more species of birds or other animals and these animals could present a safety hazard to the aircraft 14.

An air distribution network is constructed from main pipelines 18 which are buried in the ground, on each side of the runway 12, at a suitable depth. At intervals along the length of each line 18 a riser tube 20 is connected to the line. Each tube terminates in a housing 22 which contains a connector and a solenoid valve. A flexible tube 24 is fixed to the connector and extends in a random manner from the connector. The tube 24 has a length which ensures that it cannot overlay a portion of the runway 12.

A compressed air source 26 is connected to the main line 18. Depending on the situation the compressed air source may comprise a large pressure vessel or a dedicated air compressor with an optimal storage tank. If appropriate use can be made of both devices. An intention in this regard is that the compressed air source should work at a controlled pressure and supply sufficient compressed air to the line 18 to activate one or more of the hoses 24 in a manner which is described hereinafter.

The compressed air source is under the control of a control unit 28. The various solenoid valves at each riser tube 20 are connected by means of lines 30 to the control unit 28.

Figure 2 illustrates one of the flexible tubes 24. The tube is coupled to a connector 32 which is fixed to the corresponding housing 22 in which is installed a solenoid valve 34. The riser tube 20 extends from the main line 18 which, as noted, is buried in the ground at a desired depth 36.

If compressed air, designated by means of an arrow 40, is applied to the main line 18, from the source 26, and the solenoid valve 34 is opened then the compressed air flows through the flexible hose 24. Depending on the pressure and the characteristics of the hose the flow of air, through the hose, can cause the hose to move with a whip action in a substantially random manner. If the ground 16 adjacent the runway 12 is to be cleared of animals and, in particular, birds, then the compressed air 40 is applied to the various hoses 24 in a manner which is determined by a program in the control unit 28 which causes the corresponding solenoid valves 34 to open and close as required. The hoses can be caused to move in a fairly vigorous manner which is not predictable and the sequence in which the hoses are activated can also be varied in a non-predictable manner. Birds in the vegetation adjacent the runway are thereby repelled and the area adjacent the runway is freed of bird life. The safety of the aircraft 14 is therefore considerably enhanced.

The repelling apparatus of the invention can be operated at different intervals, on an ongoing basis, or it can be operated before an aircraft takes off from, or lands on, the runway 12. Some degree of experimentation may be required in order to ascertain the most effective way, under the circumstances, of making use of the invention.

Figure 2 illustrates a vessel 42 with an outlet conduit 44 which is connected to the line 18. The vessel may contain water, sand, mud 46 or any other appropriate substance. When air flows through the main line 18 a portion of the substance in the vessel is entrained into the air flow and is distributed through an outlet end 48 of the flexible hose 24. If the substance 46 is, for example, sand then the sand is ejected from the end 48 at high speed, depending on the velocity of the escaping air, and this can add to the deterrent effect of the hose which is flexing to and fro.

Figure 3 illustrates a variation which can be incorporated in the apparatus shown in Figure 1. Inflatable scarecrows 50 are connected to the line 18 at regular intervals.

The scarecrows can be inflated by the compressed air and when this happens each scarecrow, which is initially in a collapsed state, is caused to move to an erect position in a short time. The sudden movement can assist in repelling birds from a given area. The inflation of each scarecrow is controlled by means of the control unit 28 which is connected via a control line 30 to a solenoid valve 34 which controls the flow of air from the line 18 to the scarecrow figure. If the inflation of the scarecrow is associated with the actuation of a hose 24, by animals in the area, then air usage may be reduced if the hose is not actuated every time the scarecrow is inflated.

Figure 4 illustrates a further variation of the invention. Each housing 22 is formed in the nature of a "pop-up" device 60 similar to a pop-up sprinkler used in an irrigation system. Thus the housing includes a tubular body 62 which contains a swivel connector 64 which is mounted to a riser tube 20 in sliding fashion. When compressed air is applied to the swivel connector the resulting force causes the swivel connector to rise along the length of the tube 20 and the corresponding end of the hose 24 which is coupled to the connector is elevated. When the supply of compressed air is disconnected from the swivel connector air escapes from the swivel connector which then settles under gravity action, into the tubular casing 62. This arrangement has a number of benefits. Firstly it allows the tube 24 to be elevated when air is applied to it. The degree of elevation can be controlled so that the tube is lifted above the grass which may be growing on the ground 16 adjacent the runway. Secondly when the device is not being used it settles into the ground and thus does not present any obstruction to traffic over the ground 16.

A further modification is shown in Figure 4. The tube 24 which may be highly flexible or substantially rigid has one or more nozzles 66 at its outlet end 48. These nozzles are shaped so that air escaping from the nozzles exerts a reaction force on the tube 24 which causes it to rotate about the swivel connector 64 as is indicated by means of a curved arrow 68. The tube can be caused to rotate fairly rapidly and vigorously so that birds adjacent the tube are repelled from the vicinity of the tube.

The period for which the tube 24 is caused to move, and the time interval between successive actuations of the tube, may be varied to achieve optional results.

It is to be understood that the apparatus of the invention is not intended to cause injury to birds but, instead, is designed to make conditions adjacent the runway unacceptable to bird life. As the hoses move vigorously it is possible, however, for the hoses to cause injury to birds. This can be a positive factor though, for a learning process sets in. The birds associate the moving hoses with danger and are therefore likely to fly away from the areas in which the hoses are installed and used.

Figure 5 is a generalised representation of an animal repelling system 70 according to the invention based on the preceding principles. The system includes a compressor or compressed air source 72 which is connected to a plurality of solenoid valves 74A, 748, 74N by means of an air distribution network 76 formed, for example, from plastic tubing. Each solenoid is used to control the supply of air from the network to a respective flexible plastic tube 78A, 78B, ...78N.

A control unit 80, which may be a micro processor-based device such as a programmable logic controller, is used to control the actuation of the various solenoid valves. The control unit is connected to a power supply 82 of any appropriate type and is connected to the solenoid valves via a cable network 84 which may for example be a two or three wire network.

Each of the solenoids 74 includes a respective decoder 86A, 86B ... 86N, and a respective unique code is associated with each of the solenoids.

The control unit is programmed to generate, at any time, one or more of the codes which are associated with the solenoids. The codes can be generated in a controlled sequence so that, for example, the codes associated with the solenoids 74A, 74B ....74N are generated in that sequence. Alternatively the codes can be generated in a random or pseudo-random fashion. The latter course of action is preferable in that it then becomes practically impossible, particularly for an animal, to predict which solenoid will be actuated at any time.

The codes which are generated by the control unit 80 are presented simultaneously via the cable network 84 to the decoders 86. If a code on the cable network is validated by a respective decoder then the solenoid associated with that decoder is actuated and the remaining solenoids are kept closed. Power from the supply 82 is transmitted over the network 84 and is used to energise the selected solenoid.

As has been noted hereinbefore when a solenoid is opened air from the compressed air source in the system is vented to atmosphere through the respective tube 78 and the release of energy in the compressed air, flowing through the tube, causes the tube to flex and move substantially randomly through the air. This acts as a significant deterrent for, at the same time, a fair amount of noise is generated as air escapes from the tube. Depending on the pressure the compressed air can cause the respective tube 78 to move violently and it is possible for the tube to injure or kill a small animal. On the other hand by adjusting the air pressure the vigorous movement of the hose 78 can be attenuated, if required.

A system 70 of the kind shown in Figure 5 can be installed at any appropriate location for example inside a building such as a hanger, on rafters of the building, outside a building on ledges or balconies or other locations at which birds are prone to congregate, on a golf course, particularly at the putting greens which should be protected from large numbers of birds, and in agricultural installations such as at orchards, vineyards and the like.

## Claims

1. A method of repelling animals from an area which includes the steps of pressurising at least one flexible tube with compressed air and, while pressurizing the tube, allowing compressed air to escape from the tube through at least one nozzle to cause a reaction force which causes movement of the tube within the area.

2. A method according to claim 1 wherein the tube is caused to move substantially randomly.

3. A method according to claim 1 or 2 wherein the tube is caused to move for a period which is variable.

4. A method according to claim 3 wherein a time interval between successive periods during which the tube is caused to move, is variable.

5. A method according to any one of claims 1 to 4 wherein at least one substance is entrained in the compressed air.

6. A method according to claim 5 wherein the substance is selected from water, sand and mud.

7. Apparatus for repelling animals from an area which includes a source of compressed air, at least one flexible tube with an inlet which is connected to the source of compressed air, and at least one outlet nozzle through which compressed air escapes from the flexible tube while the tube is connected to the source of compressed air thereby to cause movement of the tube within the area.

8. Apparatus according to claim 7 wherein the tube is elongate and flexible.

9. Apparatus according to claim 7 or 8 wherein the at least one outlet nozzle is oriented to assist in causing movement of the flexible tube.

10. Apparatus according to any one of claims 7 to 9 wherein the tube is caused to rotate around a fixed axis.

11. Apparatus according to any one of claims 7 to 10 wherein the tube is elevated upon application of the compressed air to the inlet and is allowed to settle to an inoperative position when the compressed air is not applied to the inlet.

12. A system for repelling animals from an area which includes a compressed air distribution network, apparatus according to any one of claims 7 to 11, which includes a plurality of the flexible tubes, connected to the network, and a control unit for applying the compressed air via the network, in a controlled manner, to the flexible tubes.

## Patentansprüche

1. Verfahren zum Abschrecken von Tieren aus einem Gebiet, welches die folgenden Schritte umfasst: Beaufschlagen mindestens eines biegsamen Schlauchs mit Druck mittels komprimierter Luft und, während der Schlauch mit Druck beaufschlagt wird, Entweichenlassen von komprimierter Luft aus dem Schlauch durch mindestens eine Düse um eine Reaktivkraft zu verursachen, die eine Bewegung des Schlauchs in dem Gebiet bewirkt.

2. Verfahren nach Anspruch 1, wobei bewirkt wird, dass sich der Schlauch im Wesentlichen zufällig bewegt.

3. Verfahren nach Anspruch 1 oder 2, wobei bewirkt wird, dass sich der Schlauch während einer variablen Periode bewegt.

4. Verfahren nach Anspruch 3, wobei ein Zeitintervall zwischen aufeinanderfolgenden Perioden, während derer bewirkt wird, dass sich der Schlauch bewegt, variabel ist.

5. Verfahren nach einem der Ansprüche 1 bis 4, wobei in der komprimierten Luft mindestens eine Substanz enthalten ist.

6. Verfahren nach Anspruch 5, wobei die Substanz ausgewählt ist aus Wasser, Sand und Schlamm.

7. Vorrichtung zum Abschrecken von Tieren aus einem Gebiet umfassend eine Quelle für komprimierte Luft, mindestens einen biegsamen Schlauch mit einem mit der Quelle für komprimierte Luft verbundenen Einlass und mindestens eine Auslassdüse, durch die die komprimierte Luft aus dem biegsamen Schlauch entweicht, während der Schlauch mit der Quelle für komprimierte Luft verbunden ist, wodurch die Bewegung des Schlauchs in dem Gebiet bewirkt wird.

8. Vorrichtung nach Anspruch 7, wobei der Schlauch länglich und biegsam ist.

9. Vorrichtung nach Anspruch 7 bis 8, wobei die mindestens eine Auslassdüse ausgerichtet ist, um zu dem Bewirken der Bewegung des Schlauchs beizutragen.

10. Vorrichtung nach einem der Ansprüche 7 bis 9, wobei bewirkt wird, dass sich der Schlauch um eine feste Achse dreht.

11. Vorrichtung nach einem der Ansprüche 7 bis 10, wobei der Schlauch angehoben wird, wenn die komprimierte Luft dem Einlass zugeführt wird, und sich in eine nicht operative Position senken kann, wenn die komprimierte Luft nicht dem Einlass zugeführt wird.

12. System zum Abschrecken von Tieren aus einem Gebiet umfassend ein Verteilungsnetzwerk für komprimierte Luft, eine Vorrichtung nach einem der Ansprüche 7 bis 11, welche eine Vielzahl biegsamer, mit dem Netzwerk verbundener Schläuche umfasst und eine Steuereinheit zum kontrollierten Zuführen der komprimierten Luft über das Netzwerk zu den biegsamen Schläuchen.

## Revendications

1. Méthode pour repousser les animaux d'une zone, qui comprend les étapes consistant à mettre sous pression au moins un tube flexible avec de l'air comprimé et, tout en mettant le tube sous pression, à permettre à l'air comprimé de s'échapper du tube à travers au moins une buse pour provoquer une force de réaction qui provoque le mouvement du tube à l'intérieur de la zone.

2. Méthode selon la revendication 1, dans laquelle le tube se déplace sensiblement au hasard.

3. Méthode selon les revendications 1 ou 2, dans laquelle le tube se déplace pendant une durée qui est variable.

4. Méthode selon la revendication 3, dans laquelle l'intervalle de temps entre les périodes successives durant lesquelles le tube se déplace est variable.

5. Méthode selon l'une des revendications 1 à 4, dans laquelle au moins une substance est entraînée dans l'air comprimé.

6. Méthode selon la revendication 5, dans laquelle la substance est choisie parmi l'eau, le sable et la boue.

7. Appareil pour repousser les animaux d'une zone qui comprend une source d'air comprimé, au moins un tube flexible avec une entrée qui est reliée à la source d'air comprimé, et au moins une buse de sortie à travers laquelle l'air comprimé s'échappe du tube flexible, que le tube étant relié à la source d'air comprimé de façon à provoquer le mouvement du tube à travers le zone.

8. Appareil selon la revendication 7, dans lequel le tube est allongé et flexible.

9. Appareil selon les revendications 7 ou 8, dans lequel la buse de sortie est orientée de façon à faciliter le mouvement du tube flexible.

10. Appareil selon l'une des revendications 7 à 9, dans lequel le tube tourne autour d'un axe fixe.

11. Appareil selon l'une des revendications 7 à 10, dans lequel le tube s'élève sous l'application de l'air comprimé à l'entrée et redescend en position non fonctionnelle quand l'air comprimé n'est pas appliqué à l'entrée.

12. Système pour repousser les animaux d'une zone qui comprend un réseau de distribution à air comprimé, l'appareil selon l'une des revendications 7 à 11, qui comprend une pluralité de tubes flexibles reliés au réseau, et une unité de contrôle pour alimenter les tubes flexibles en air comprimé à travers le réseau, de façon contrôlée.
